# EUROPEAN PATENT APPLICATION

(11) **EP 2 725 275 A2**
(43) Date of publication of application: **30.04.2014**
(21) Application number: 13189056.8
(22) Date of filing: 17.10.2013
(51) Int. Cl.: F16L 33/035

(54) **Tie clamp**

(30) Priority: 25.10.2012 KR 20120119078
(71) Applicant: Dong-A Metal Co., Ltd., Gyeongbuk (KR)
(72) Inventor: Chung, Han II, Daegu (KR); Bae, Young Jin, Daegu-shi (KR); Park, Kyu Dong, Daegu-shi (KR); Song, Jeong Hun, Daegu-shi (KR)
(74) Representative: Misselbrook, Paul

(57) **Abstract**

Disclosed is a tie clamp 100 configured to readily restrain an object to be restrained even if the space where the object is positioned is narrow and to prevent an interference phenomenon. The tie clamp includes: a clamp body 102 formed by bending an elastic metal material having a relatively long length as compared to the width thereof in a circular shape; a male restrainer 103 and a female restrainer 104 formed at the opposite end sides of the clamp body 102 to restrain an object to be restrained; and an ear 106 formed on each of the male restrainer 103 and the female restrainer 104 so that a tool can be used to reduce the diameter of the clamp body 102 to turn the clamp body 102 into a restraint state. The male restrainer 103 includes an insertion extension 110 having a width smaller than that of the clamp body 102 and extending from the right end clamp body 102, and one or more upper catch steps 111 formed on the insertion extension to protrude upward. The female restrainer 104 includes a tunnel-shaped guide 116 configured to accommodate the insertion extension 110 at the left end of the clamp body 102, and a lower catch step 112 formed in the guide 116 to be engaged with the upper catch steps 111 in an intercrossed form so that the insertion extension 110 is prevented from being released.

## Description

### BACKGROUND OF THE INVENTION

### 1. Field of the invention

The present invention relates to a tie clamp, and more particularly to a tie clamp improved to be capable of restraining an object to be retrained (hereinafter, simply referred to as an "object") without using a separate fastening means such as a bolt so that the tie clamp is simplified in construction and does not interfere with any other element, and to be capable of being easily fastened within a narrow space as well as exhibiting a strong restraint force.

### 2. Description of the Prior Art

Clamps are used for restraining a vehicle airbag, a heat radiation pad of a turbocharger, a constant velocity joint boot, etc. Besides these usages, the clamps may be used as a means for connecting different elements of a vehicle, hoses, tubular bodies or the like in a general industrial field to restrain them to each other.

Various types of such clamps are used including a wire type, a band type, etc. When a wire type clamp is used for a long period of time to restrain an object or due to the thermosetting of the clamp, the clamp may penetrate into the surface of the object so that the object is damaged. Therefore, recently, such a wire type clamp is not used, and a band type clamp with a predetermined width is used.

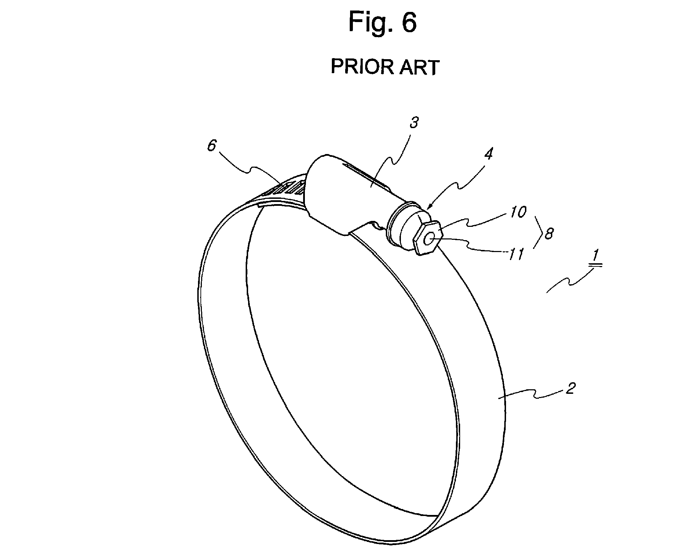

Various kinds of band type clamps for restraining an object have been developed and used, and a representative example will be discussed below with reference to FIG. 6.

A conventional clamp 1 includes a clamp body 2 formed by bending an elastic stainless steel having a relatively long length as compared to the width thereof, and a fastening housing 3 fixed to the right end of the clamp body 2 that is coupled to a fastening bold 4.

A screw slot part 6 is formed over a predetermined length from the left end of the clamp body 2 to be engaged with threads 5 formed on the shaft of the fastening bolt 4 so that the screw slot part 6 may be moved back and forth in relation to the right end according to the forward or reverse rotation of the fastening bolt 4, thereby reducing or increasing the diameter of the clamp body 2.

The conventional clamp as described above is configured such that, in order to restrain an object, the diameter of the clamp body is initially increased as much as possible by rotating the fastening bolt reversely, then the object is received in the clamp body, and then the fastening bolt is tightened so that the threads of the fastening bolt can be engaged with the screw slot part to reduce the diameter of the clamp body to restrain the object.

The conventional clamp for restraining an object such as an airbag, a heat radiation pad of a turbocharger, or a constant velocity joint boot as described above should be configured by coupling separate elements such as a fastening housing and a fastening bolt with the clamp body. Thus, it becomes complicated to manufacture and assemble such a clamp, and, due to many manufacturing and assembling steps, the manufacturing costs are increased.

Because the clamp is configured by many independent elements, an error produced in the process of manufacturing and an error produced in the process of assembling frequently lead to a situation in which a practically assembled clamp does not normally work so that such a clamp is frequently rejected. The assembling process of many elements depends on manual labor because it is impossible to automate the assembling process. Consequently, the assembling is performed manually rather than mechanically. Therefore, the probability of misassembly is high which causes the quality of the clamp to be poor and makes it difficult to maintain the quality consistently.

Furthermore, because the fastening housing and the fastening bolt that form the clamp are exposed to the outside of the clamp too much even in a state where the clamp restrains an object, interference may be caused with the object or other elements around the clamp. When the positions of the restraint housing and the fastening bolt are erroneously set, interference occurs periodically, which is responsible for the damage of an associated apparatus or installation as well as results in a malfunction of the apparatus or the installation.

In particular, it is difficult to normally fasten an object such as an airbag or a heat radiation pad installed in a narrow space due to the protruding fastening housing and fastening bolt. Furthermore, even after the clamp is engaged with the object, it is difficult for a worker to use a tool so as to rotate the fastening bolt to a restraining position.

### SUMMARY OF THE INVENTION

Accordingly, the present invention has been made to solve the above-mentioned problems occurring in the prior art.

According to an aspect of the present invention, there is provided a tie clamp including: a clamp body formed by bending an elastic metal material having a relatively long length as compared to the width thereof in a circular shape; a male restrainer and a female restrainer formed at the opposite end sides of the clamp body to restrain an object to be restrained; and an ear formed on each of the male restrainer and the female restrainer so that a tool can be used to reduce the diameter of the clamp body to turn the clamp body into a restraint state. The male restrainer includes an insertion extension having a width smaller than that of the clamp body and extending from the right end clamp body, and one or more upper catch steps formed on the insertion extension to protrude upward. The female restrainer includes a tunnel-shaped guide configured to accommodate the insertion extension at the left end of the clamp body, and a lower catch step formed in the guide to be engaged with the upper catch steps in an intercrossed form so that the insertion extension is prevented from being released.

With the tie clamp configured as described above, an object to be restrained can be readily restrained even if the space where the object is positioned is narrow. In addition, in the restrained state, it is possible to prevent an interference phenomenon because the tie clamp is not provided with a protruding element such as a fastening housing and a fastening bolt that have been used in the prior art as a restraint means.

The present invention improves a clamp for restraining, for example, an air intake hose by providing a restraint means in the clamp body itself rather than using either a fastening housing or a fastening bolt separately, thereby simplifying the configuration of the clamp and allowing the clamp to be easily manufactured. In addition, the inventive tie clamp is configured to be capable of readily restraining an object in a narrow space, and excluding interference with an apparatus or an element around the object, thereby enhancing the quality of the clamp.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view illustrating a tie clamp according to an exemplary embodiment of the present invention in an unclamped state;
FIG. 2 is a cross-sectional view of the tie clamp taken along line A-A in FIG. 1;
FIG. 3 is a cross-sectional view of the tie clamp taken along line A-A in FIG. 1 in a clamped state;
FIG. 4 is a perspective view illustrating a part extracted from a tie clamp according to another exemplary embodiment of the present invention;
FIG. 5 is a perspective view illustrating a tie clamp according to a still another exemplary embodiment of the present invention; and
FIG. 6 is a perspective view illustrating a configuration of a conventional clamp.

### DETAILED DESCRIPTION OF THE PREFERRED EMBODIMENTS

Hereinafter, several exemplary embodiments of the present invention will be described with reference to the accompanying drawings.

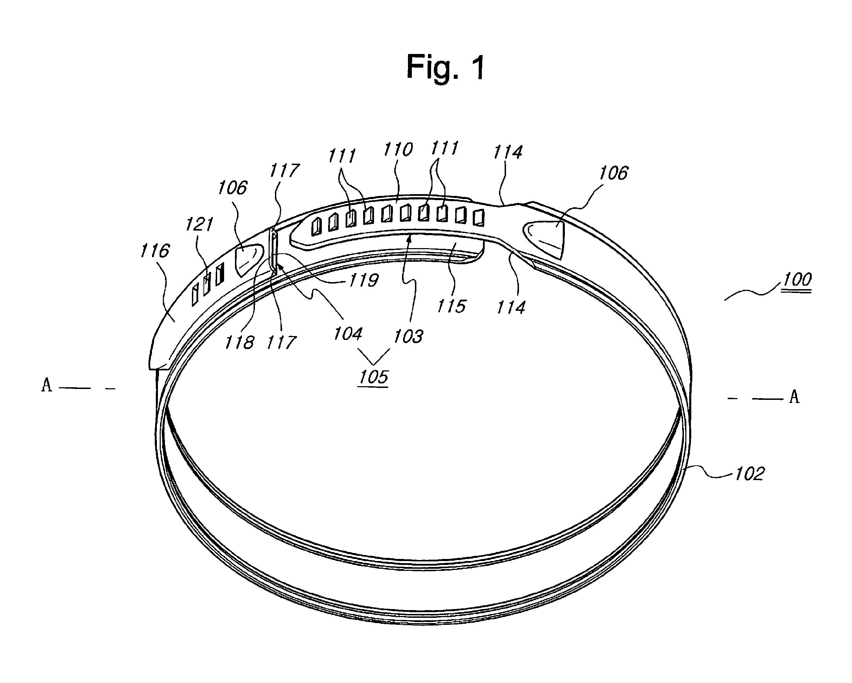

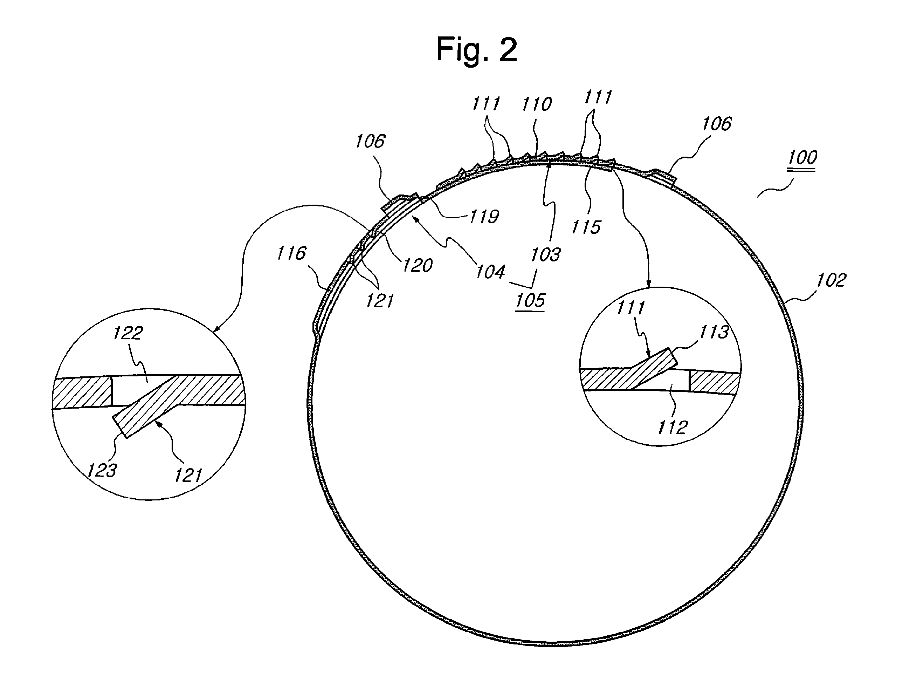

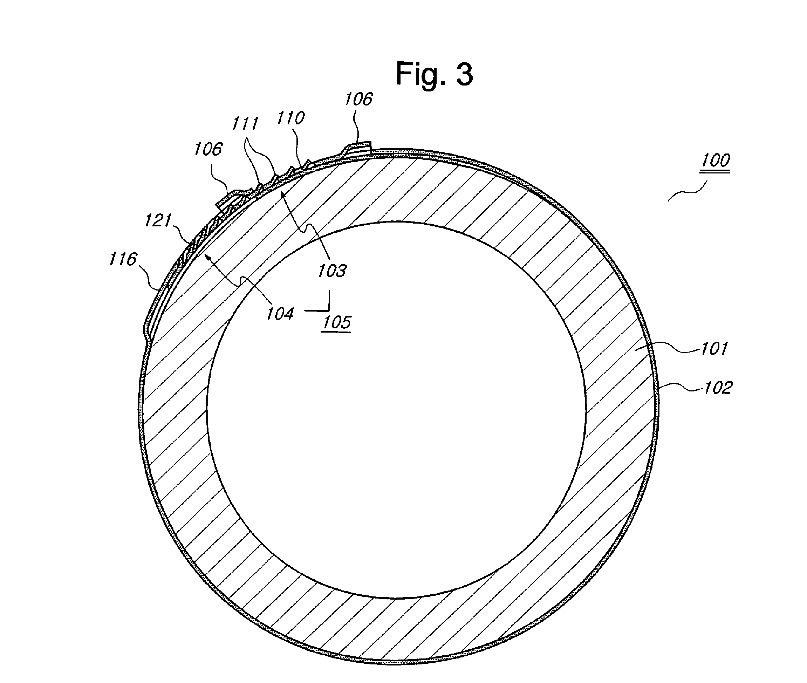

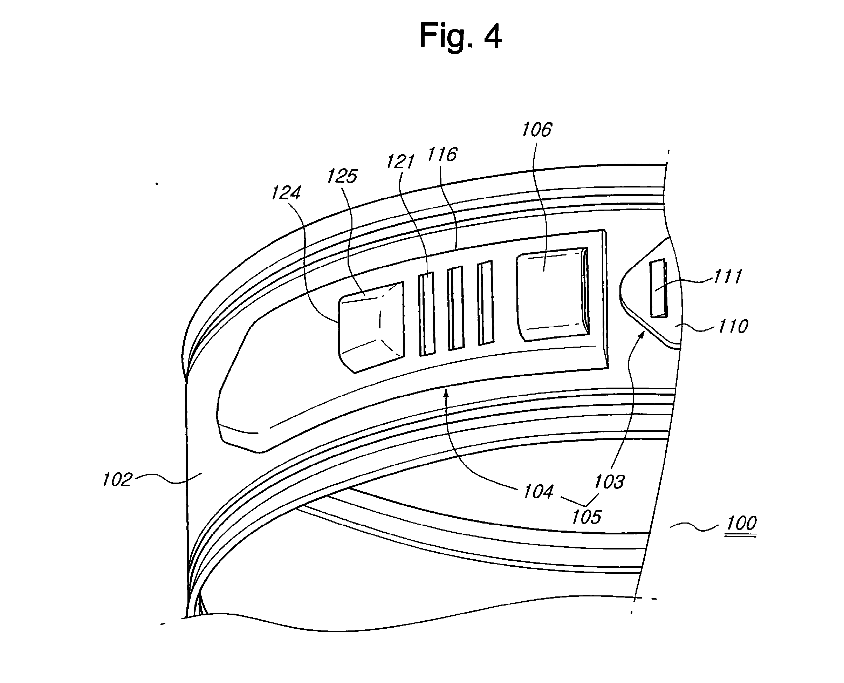

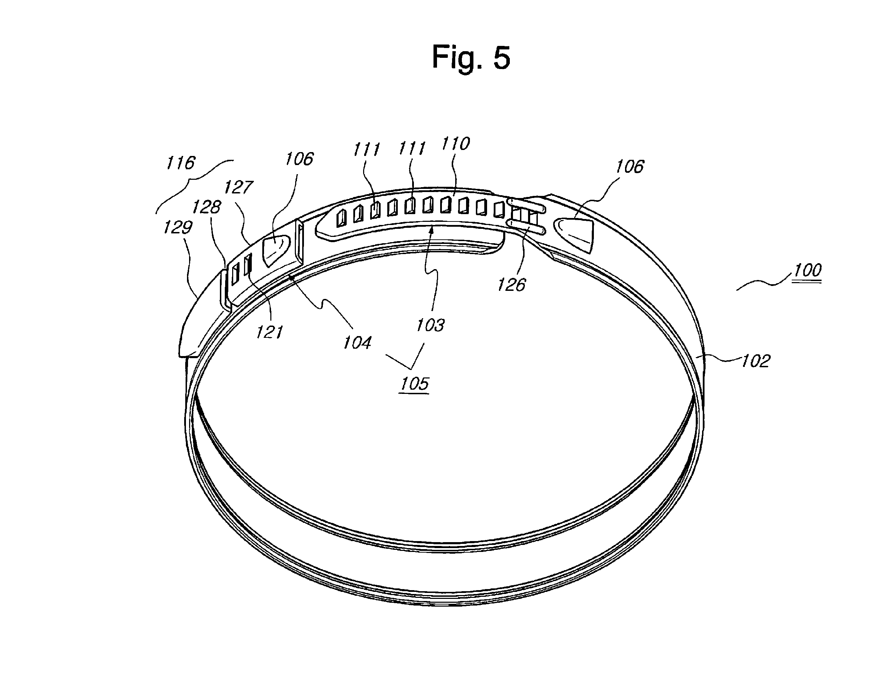

FIG. 1 is a perspective view illustrating a tie clamp according to an exemplary embodiment of the present invention in an unclamped state, FIG. 2 is a cross-sectional view of the tie clamp taken along line A-A in FIG. 1, and FIG. 3 is a cross-sectional view of the tie clamp taken along line A-A in FIG. 1 in a clamped state. FIG. 4 is a perspective view illustrating a part extracted from a tie clamp according to another exemplary embodiment of the present invention. In addition, FIG. 5 is a perspective view illustrating a tie clamp according to a still another exemplary embodiment of the present invention.

The tie clamp 100 according to the first exemplary embodiment of the present invention includes a clamp body 102 configured to accommodate an object to be restrained 101 ("object") such as an airbag, a heat radiation pad of a turbocharger or a constant velocity joint boot. The clamp body 102 is formed by bending an elastic metal material having a relatively long length as compared to the width thereof in a circular shape.

In the opposite end sides of the clamp body 102, a male restrainer 103 and a female restrainer 104 are formed to configure a restraint means 105 that retrains the object 101 accommodated in the clamp body 102.

On each of the male restrainer 103 and the female restrainer 104, an ear 106 is provided to protrude upward so as to allow a tool to be used to reduce the diameter of the clamp body 102 so that the male restrainer 103 and the female restrainer 104 are engaged with each other and turned into a restraining state.

The male restrainer 103 of the restraint means 105 includes an insertion extension 110 formed at the right end side to extend with a width narrower than that of the clamp body 102, and one or more catch steps 111 integrally formed on a surface of the insertion extension 110 to protrude upward.

The left side of each upper catch step 111 is connected with the insertion extension 110, the three sides of the upper catch step 111 except the left side are configured such that the right end 113 of the upper catch step 111 protrudes upward as compared to the top surface of the insertion extension 110 by forming a slot 112 and then pushing the right end 113 of the upper catch step 111 upward.

The female restrainer 104 includes: a support 115 that is formed at the left end side of the clamp body 102 to allow the right end portion of the clamp body 102 to be positioned thereon and has a wide width portion configured to allow the clamp body 102 to entirely wrap the outer circumferential surface of the object 101, and to stably guide the insertion extension 110 to be inserted into the female restrainer 104; and a tunnel-shaped guide 116 formed on the left side of the support 115 to accommodate and suppress the insertion extension 110 from being moved in the widthwise direction of the clamp body 102.

The guide 116 is integrally formed with a pair of piers 117 protruding upward at the opposite widthwise sides of the clamp body 102 and a slab 118 interconnecting the piers 117. The guide 116 has an entrance 119 at the front end thereof in the longitudinal direction of the clamp body 102, and an extension hole 120 at the rear side of the entrance 119.

The slab 118 is formed with one or more lower catch steps 121 so that the lower catch steps 121 are engaged with the upper catch steps 111 formed on the insertion extension 110 introduced into the extension hole 120 in an intercrossed form to prevent the release of the insertion extension 110, thereby restraining the object 101.

The right side of each lower catch step 121 is connected with the slab 118, and the three sides of the lower catch step 121 except the right side are configured such that the left end 123 of the lower catch step 121 protrudes downward as compared to the top surface of the slab 118 by forming a slot 122 and then pushing the left end 123 downward.

The number of the lower catch steps 121 may be optionally determined, for example, to be equal to or smaller than the number of the upper catch steps 111.

The guide 116 may be formed as a unit with a length capable of accommodating the insertion extension 110. In an exemplary embodiment, the guide 116 may be formed by one or more separated portions. In another exemplary embodiment, a release dome 125 may be further formed and an insertion hole 124 at the left portion of the top surface of the slab 118 of the guide 116, and an insertion hole 124 may be formed in the release dome 125 so that a tool such as a driver may be inserted into the insertion hole 124 to release the upper catch steps 111 engaged with the lower catch steps 121.

In a still another exemplary embodiment of the present invention, a reinforcing embossing 126 may be further formed at a neck portion of the insertion extension 110, and the guide 116 may be configured by a front guide 127 where the lower catch steps 121 are formed, and a rear guide 129 formed at the rear side of the front guide 127 to be spaced apart from the front guide 127 by a release space 128 that allows a tool to be inserted into the release space 128 so as to release the upper catch steps 111 engaged with the lower catch step 121.

Now, descriptions will be made how to use the inventive tie clamp 100 configured as described above.

Because the male restrainer 103 and the female restrainer 104 are not coupled with each other at the initial stage so that the clamp body 102 is in a state where the diameter of the clamp body 102 is expanded, the clamp 100 may be readily positioned on the object 101 at a position for restraining the object 101. In this state, the ears 106 formed on the male restrainer 103 and the female restrainer 104 are grasped and pushed using tools such that the diameter of the clamp body 102 is reduced and the male restrainer 103 and the female restrainer 104 are coupled to each other to retain the diameter in the reduced state. Consequently, the restraint of the object 101 can be completed.

More specifically, when the ears 106 are pushed by the tools to reduce the diameter of the clamp body 102, the insertion extension 110 that forms the male restrainer 103 is accommodated in and engaged with the guide 116 that forms the female restrainer 104.

Then, the upper catch steps 111 formed on the insertion extension 110 and each having the rear end 113 formed to protrude upward are engaged in an intercrossed form with the lower catch steps 121 formed on the slab 118 of the guide 118 and each having the rear end 123 formed to protrude downward, and maintained in the engaged state.

In this state, due to the elasticity of the clamp body 102 itself, a force to return the clamp body 102 to its original state is induced in the clamp body 102, thereby inducing a force to expand the insertion extension 110 to the right side and the guide 116 to the left side. However, because the upper catch steps 111 and the lower catch steps 121 are engaged with each other in the intercrossed form, the insertion extension 110 and the guide 116 are prevented from being returned to the original positions thereof and consequently, the object 101 is restrained.

According to the present invention, even when an object to be restrained is positioned in a narrow space, the object can be readily restrained. In addition, because, in the restrained state, a protruding element like a fastening housing and a fastening bolt used as a restraint means in the prior art does not exist, it is possible to prevent an interference phenomenon.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A tie clamp(100) comprising:
a clamp body(102) formed by bending an elastic metal material having a relatively long length as compared to the width thereof in a circular shape;
a male restrainer(103) and a female restrainer(104) formed at the opposite end sides of the clamp body(102) to restrain an object to be restrained; and
an ear(106) formed on each of the male restrainer(103) and the female restrainer(104) so that a tool can be used to reduce the diameter of the clamp body(102) to turn the clamp body(102) into a restraint state,
wherein the male restrainer(103) comprises an insertion extension(110) having a width smaller than that of the clamp body(102) and extending from the right end clamp body(102), and one or more upper catch steps(111) formed on the insertion extension(110) to protrude upward, and
the female restrainer(104) comprises a tunnel-shaped guide(116) configured to accommodate the insertion extension(110) at the left end of the clamp body(102), and a lower catch step(112) formed in the guide(116) to be engaged with the upper catch steps(111) in an intercrossed form so that the insertion extension(110) is prevented from being released.

2. The tie clamp(100) as claimed in claim 1, further comprising:
a support(115) that is formed at the left end side of the clamp body(102) to allow the right end portion of the clamp body(102) to be positioned thereon and has a wide width portion configured to allow the clamp body to entirely wrap the outer circumferential surface of the object and to guide the insertion extension(110) to be inserted into the female restrainer(104).

3. The tie clamp as claimed in claim 1, wherein the guide(116) is integrally formed with a pair of piers(117) protruding upward at the widthwise opposite sides of the clamp body(102) and a slab(118) interconnecting the piers(117), and
the guide(116) includes an entrance(119) at the front end thereof to allow the insertion extension(110) to be introduced into the guide(116), and an extension hole (120) formed to accommodate the insertion extension(110) at the rear side of the entrance(119).

4. The tie clamp(100) as claimed in claim 3, further comprising a release dome(125) on the top surface of the slab(118) of the guide(116), wherein the dome(125) is provided with an insertion hole(124) so that a tool is inserted into the insertion hole so as to release the upper catch steps(111) engaged with the lower catch step(112).
